# EUROPEAN PATENT APPLICATION

(11) **EP 2 341 240 A1**
(43) Date of publication of application: **06.07.2011**
(21) Application number: 09823116.0
(22) Date of filing: 26.10.2009
(51) Int. Cl.: F03D 1/06

(54) **A MULTIPLE-PANEL WIND GENERATOR BLADE WITH INTEGRATED ROOT**

(30) Priority: 28.10.2008 ES 200803064
(71) Applicant: Gamesa Innovation & Technology, S.L., 31621 Sarriguren (ES)
(72) Inventor: GARCIA VIDORRETA, Enrique, E-31621 Sarriguren (ES)
(86) International application number: PCT/ES2009/070459
(87) International publication number: WO 2010/049561

(57) **Abstract**

A wind turbine multi-panel blade with the integrated root, with an aerodynamic profile made up of at least one lower shell (17) on the pressure side and one upper shell (19) on the suction side and two prefabricated inner crossbeams (11, 13), with these lower and upper shells (17, 19) assembled with these inner crossbeams (11, 13), wherein these lower and upper shells (17, 19) and these prefabricated inner crossbeams (11, 13) including, respectively, some extensions (31, 33, 37, 39) configured so that they can be assembled making up the blade's root. The blade may also include a front shell (15) assembled with the crossbeam (11) nearest to the leading edge next to the lower and upper shells (17, 19).

## Description

### FIELD OF THE INVENTION

This invention generally refers to wind turbine blades and more specifically to multi-panel blades with integrated root.

### BACKGROUND

Wind turbines include a rotor that supports one or several blades that are spread out radially to capture the wind's kinetic energy and cause a rotary movement of a power train connected to an electric generator to produce electrical power.

The amount of energy produced by the wind turbines depends on the blade rotor sweep surface that receives the wind action and, consequently, increasing the length of the blades normally implies an increase in the wind turbine's energy production.

To facilitate the manufacturing of wind turbine blades, the division of the blade into several panels has been proposed that can be manufactured individually perfectly and assembled later on to make up the blade. Some of the proposals known are the following.

EP 1 184 566 A1 describes a wind turbine blade that is made up assembling one, two or more longitudinal sections, each of which make up a central element made up by a longitudinal carbon fibre tube on which a series of transversal carbon fibre or fibre glass ribs are assembled connected to this central area and a carbon fibre or fibre glass cover connected to these ribs.

WO 01/46582 A2 describes a wind turbine blade that has a plurality of divided elements connected to the load transmission box beam and separated by gaskets that allow these divided elements movements between each other to minimise the traction forces in the blade region where these divided elements are situated.

In the known technique, the blade's root is manufactured apart from the panels that make up the rest of the blade, and is assembled later on using a co-curing process or with an adhesive bonding.

The current trend in the industry for wind turbines with larger rotor blades requires new blade designs suitable for firstly complying with transport and quality conditions set out by large sized blades and secondly by the conditions set out by the manufacturing processes with a view to obtaining the maximum degree of automation.

### SUMMARY OF THE INVENTION

An object of this invention is to provide a configuration of a wind turbine blade that allows to prefabricate its components including the blade's root.

Another object of this invention is to provide a wind turbine blade configuration that positively contributes to automating its manufacturing.

These and other objects of this invention are achieved providing a wind turbine multi-panel blade with an aerodynamic profile made up by at least a lower shell on the pressure side and an upper shell on the suction side and two prefabricated inner crossbeams. These lower and upper shells are assembled to these inner crossbeams, in which these lower and upper shells and these prefabricated inner crossbeams include, respectively, some extensions configured in such a way that they can be assembled making up the blade's root.

In a preferred embodiment the blade also includes a front shell assembled to the crossbeam nearest the leading edge together with the lower and upper shells. With this a configuration is obtained that facilitates the shaping of the transition area of these extensions to the circular section root area.

Other characteristics and advantages of this invention can be inferred from the following detailed description regarding the accompanying figures.

### BRIEF DESCRIPTION OF FIGURES

Figure 1 is a schematic view in perspective of a wind turbine blade according to this invention.
Figures 2a, 2b and 2c are schematic views in transversal section by the A-A plane of Figure 1 of the three blade embodiments.
Figure 3 is a schematic view in perspective of the prefabricated components that make up the blade according to a preferred embodiment of this invention before its assembly.
Figure 4 is a view in transversal section of the blade in Figure 3 by the B-B plane.
Figure 5 is a view in transversal section of the blade in Figure 3 by the C-C plane.

### DETAILED DESCRIPTION OF PREFERRED EMBODIMENTS

As is well known in the technique, a multi-panel blade has several advantages:
- It allows the use of different materials and/or manufacturing processes and/or structural configurations for each part of the blade according to its requirements, which optimises the cost of the blade.
- It makes quality control easier.
- It allows the blade manufacturer to organise its plans according to different criteria and subcontract the manufacturing of any of the parts if this is necessary.

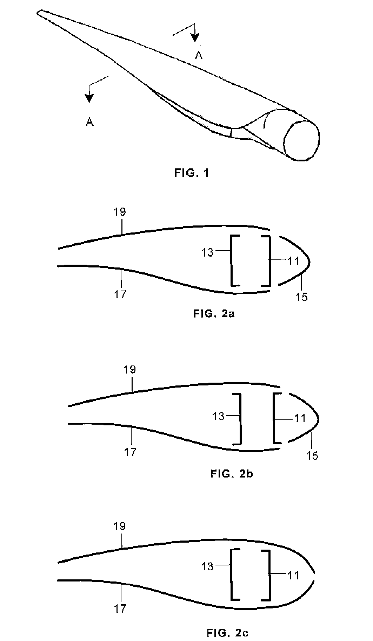

Figure 1 shows the typical aerodynamic profile of a wind turbine blade and Figures 2a, 2b and 2c show three possible multi-panel configurations.

In the configurations shown in Figures 2a and 2b the blade components are two C shaped crossbeams 11, 13 with their flaps designed to facilitate the assembly of the shells pointing in and out respectively easier, a front shell 15 and two lower and upper shells 17, 19 and in the case of Figure 2c the blade components are two crossbeams 11, 13 and two lower and upper shells 17, 19.

In the configurations shown in Figures 2a and 2b the panels are assembled so that, on the one hand, there is continuity in the three shells 15, 17, 19 whose external surfaces therefore configure the blade's aerodynamic profile and, on the other, that the three shells 15, 17, 19 are joined to the crossbeam 11 next to the leading edge and the lower and upper shells 17, 19 stay joined to the crossbeam 13.

In the configuration shown in Figure 2c the panels are assembled so that, on the one hand, there is continuity in the lower and upper shells 17, 19 whose external surfaces therefore configure the aerodynamic profile of the blade and, on the other, that the lower and upper shells 17, 19 stay joined to the two cross beams 11, 13.

According to this invention (applicable to the multi-panel configurations mentioned and to any others in which the lower and upper shells 17, 19 stay assembled to the two crossbeams 11, 13), the crossbeams 11, 13 and the upper and lower shells 17 and 19 include some extensions 31, 33 37, 39 configured so that they can be assembled making up the root of the blade that has a first transition section and a second circular shaped section.

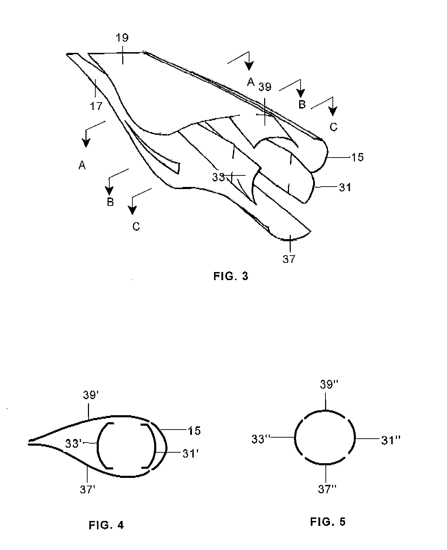

Thus, and as shown in Figures 4 and 5, that correspond to any of the blades shown in Figures 2a, and 2b, the configurations of these extensions 31, 33, 37, 39 include a first area 31', 33', 37', 39' with which the root transition section of the blade is made up and a second area 31", 33", 37", 39" with a circular sector shape to make up the circular section of the root of the blade.

The assembly of these extensions 31, 33, 37 and 39 can be carried out with the same technique as the one used for assembling shells 15, 17, 19 and crossbeams 11, 13, in which case the configuration of their edges should be of the same type, or with any other that is suitable.

Among the advantages of this integrated root configuration with respect to the traditional root structure stuck or co-cured to the rest of the blade, the following are worthy of mention:
- Better control of the root area's geometry, as all the parts are carried out with female moulds.
- Improvement in the assembly of the different parts that make up the blade (directly derived from the greater dimensional control mentioned in the previous paragraph).
- Less time in finishing phase (cutting of surplus material, polishing, reworks) due to the better dimensional control of the parts to be assembled.
- More reinforced structure: the configuration with the integrated root in composite material allows for having reinforcement fibre continually from the tip of the blade to the root which facilitates the correct transmission of the stresses through the structure.

Although this invention has been described entirely in terms of preferred embodiments, it is clear that could be introduced modifications within its scope, not regarding the latter as limited by the embodiments described above, rather by the following claims.

## Claims

1. A wind turbine multi-panel blade with an aerodynamic profile made up of at least one lower shell (17) on the pressure side and one upper shell (19) on the suction side and two prefabricated inner crossbeams (11, 13), with these lower and upper shells (17, 19) assembled with these inner crossbeams (11, 13), **characterised by** these lower and upper shells (17, 19) and these prefabricated inner crossbeams (11, 13) including, respectively, some extensions (31, 33, 37, 39) configured so that they can be assembled making up the blade's root.

2. A wind turbine multi-panel blade with an aerodynamic profile according to claim 1, **characterised by** it also having a front shell (15) assembled with the nearest crossbeam (11) to the leading edge next to the lower and upper shells (17, 19).

3. A wind turbine blade according to any of the claims 1-2, **characterised by** the configuration of these extensions (31, 33, 37, 39) including a first area (31', 33', 37', 39') with which the transition section of the root of the blade and a second area (31", 33", 37", 39") with a circular sector shape is made to make the circular section of the root of the blade.

4. A wind turbine blade according to any of the claims 1-3, **characterised by** these extensions (31, 33, 37, 39) being assembled using an adhesive bonding.

5. A wind turbine blade according to any of the claims 1-4, **characterised by** these extensions (31, 33, 37, 39) being assembled using a riveted joint.
